# EUROPEAN PATENT APPLICATION

(11) **EP 3 342 476 A1**
(43) Date of publication of application: **04.07.2018**
(21) Application number: 16207151.8
(22) Date of filing: 28.12.2016
(51) Int. Cl.: B01D 61/44, B01D 61/54, B01D 65/08

(54) **ELECTRODIALYSIS PROCESS FOR RAFFINATION OF PROCESS STREAMS USING BIPOLAR MEMBRANES**

(71) Applicant: Clariant International Ltd, 4132 Muttenz (CH)
(72) Inventor: Tubes, Lina, 81377 München (DE); Dennewald, Danielle, 80798 München (DE); Kochan, Jozef, 65717 Hofheim (DE); Zavrel, Michael, 82140 Olching (DE); Bicker, Markus, 65719 Hofheim (DE); Toufar, Helge, 04155 Leipzig (DE)
(74) Representative: Graser, Konstanze

(57) **Abstract**

The present invention is directed to a self-sufficient process for the electrodialytical raffination of process streams containing components which tend to polymerize, gel or precipitate within pH shifts.

## Description

The present invention is directed to a self-sufficient process for the electrodialytical raffination of process streams containing components which tend to polymerize, gel or precipitate within pH shifts.

Process streams from industrial processes contain a mix of various valuable components, such as the actual product, remnants of the substrates but also by-products and potential impurities such as acids, salts or trace minerals.

If the process stream contains the product ("product stream"), it is often necessary to purify the stream by removing acids and salts to obtain a product of higher purity and thus higher quality. If the process stream is a waste stream, it is of economical and environmental importance to recover remaining substrate for recycling purposes and recover potentially valuable by-products to decrease the production costs of the process.

These treatements are usually too expensive or technically not feasible, if the process stream considered contains components sensitive to pH variations, which tend to polymerize, gel or precipitate as the pH of the considered process stream varies. This applies particularly to process streams which are subjected to pH shifts during raffination processes.There are various processes known within the state of the art for separating components such as salts and acids from process streams. However, ion exchange or capacitive deionization are only an economically feasible option if the salt or acid content is very low. Electrodialysis on the other hand leads to acceptable process costs also at higher salt and acid contents, this technique, however, involves a shift in pH and thus leads to polymerization, gelling or precipitation if these process streams are sensitive to pH variations. Precipitation, gelling or polymerization phenomena lead to a direct clogging of the electrodialysis unit causing serious damage and making the deionization impossible.

Within the present invention, the term "polymerization" refers to a process of reacting monomer molecules together in a chemical reaction to form polymer chains or three-dimensional networks. There are many forms of polymerization and different systems exist to categorize them which are well known to a person skilled in the art.

Within the present invention, the term "gelling" refers to the generation of a solid jelly-like material that can have properties ranging from soft and weak to hard and tough ("gel"). Gels are defined as a substantially dilute cross-linked system, which exhibits no flow when in the steady-state. By weight, gels are mostly liquid, yet they behave like solids due to a three-dimensional cross-linked network within the liquid. It is the crosslinking within the fluid that gives a gel its structure and contributes to the adhesive stick. In this way, gels are a dispersion of molecules of a liquid within a solid in which the solid is the continuous phase and the liquid is the discontinuous phase. The person skilled in the art is well aware of any gelling process or phenomenon.

Within the present invention, the term "precipitation" refers to a process/phenomenon leading to the creation of a solid from a solution. When the reaction occurs in a liquid solution, the solid formed is called the 'precipitate'.

If the process stream concerned is considered a "waste stream", the stream is often simply discarded. Within the present invention, the term "waste stream" comprises any process stream which is within the so far methods of the state of the art not further processed and thrown away. This may be due to the fact that further processing is considered to be not economically attractive or technically not possible. The result of throwing these process streams away without recovery of valubale components and without reduction of the volume of these streams significantly increases the production costs and the discharge costs. This applies in particular to process streams containing a high amount of salts or acids.

Regarding industrial scale production processes, a key barrier is not only the production of a high quality end product but also the expenditure of costs. Thus an efficient process with low energy and material consumption and low impact on the environment as well as a high product purity is of major importance.

It was therefore an object of the present invention to provide a process which meets these key criteria.

It has now been surprisingly found by the inventors of the present invention that this object can be met by a process for the raffination of process streams comprising the steps
a) Providing a process stream which is characterized by an increase of viscosity to at least 10 mPa·s at a shear rate of 20 s⁻¹ and 20 °C occurring within a time period of less than 2 hours times membrane surface area in m² per liter volume treated, due to a pH variation in the process stream of at least 0.5 %; and/or which is characterized by particle formation of a Sauter mean diameter d32 of at least 0.2 µm or a turbidity of at least 20 FNU within a time period of less than 2 hours times membrane surface area in m² per liter volume treated, due to a pH variation in the process stream of at least 0.5 %;
b) Deionization of the process stream by electrodialysis using at least one bipolar membrane;
c) Separation of an acid and/or an alkaline fraction from the deionized process stream;
d) Addition of at least part of the separated alkaline and/or acid fraction to the stream of step b);
wherein steps a) to d) are repeated at least once.

This process will not only provide a deionized high purity product stream suitable for refined applications or permit the recycling of remaining substrate from waste streams, respectively, but it will also guarantee a process with reduced waste volumes and low material investments leading to an economically highly feasible process.

The process is particularly advantageous as it is self-sufficient regarding pH adjustment as integrating the separated acid and/or alkaline fraction will enable an economical production and direct on-site integration leading to further economical advantages.

The term "process stream" as used within the present invention refers to any type of flux in chemical, physical or biotechnological processes characterized by an increase of viscosity to at least 10 mPa·s at a shear rate of 20 s⁻¹ and 20 °C occurring within a time period of less than 2 hours times membrane surface area in m² per liter volume treated, due to a pH variation in the process stream of at least 0.5 %; and/or which is characterized by particle formation of a Sauter mean diameter d32 of at least 0.2 µm or a turbidity of at least 20 FNU within a time period of less than 2 hours times membrane surface area in m² per liter volume treated, due to a pH variation in the process stream of at least 0.5 %.

The term "membrane surface area" as used within the present invention refers to the product of the surface area of one cation or anion exchange membrane times the number of membrane pairs in the membrane stack. The term is well known to a person skilled in the art.

Within a preferred embodiment, the process stream is characterized by an increase of viscosity to at least 20 mPa·s, more preferred to at least 30 mPa·s, even more preferred to at least 40 mPa·s, particularly preferred to at least 50 mPa·s, also preferred to at least 60 mPa·s and most preferred to at least 80 mPa·s at a shear rate of 20 s⁻¹ and 20 °C occurring within a time period of less than 2h times membrane surface area in m² per liter volume treated, due to a pH variation in the process stream of at least 0.5 % or which is characterized by particle formation of a Sauter mean diameter d32 of at least 1 µm, more preferred at least 5 µm, even more preferred at least 10 µm and in particular preferred at least 15 µm or a turbidity of at least 100 FNU, more preferred at least 200 FNU, most preferred at least 400 FNU within a time period of less than 2 hours times membrane surface area in m² per liter volume treated, due to a pH variation in the process stream of at least 0.5 %.

The Sauter mean diameter (d32) is defined as the diameter of a sphere that has the same volume/surface area ratio as a particle of interest. The determination of the Sauter mean diameter is described in ISO 9276-2. The term "Sauter mean diameter" and its determination is well known to a person skilled in the art.

One of the most widely used measurement unit for turbidity is according to ISO the Formazin Nephelometric Units (FNU). The determination of turbidity in FNU units is described in ISO 7027, which provides the method in water quality for the determination of turbidity. It is used to determine the concentration of suspended particles in a sample of water by measuring the incident light scattered at right angles from the sample. The scattered light is captured by a photodiode, which produces an electronic signal that is converted to a turbidity. The paramter and its determination is well known to a person skilled in the art.

The process stream according to the present invention preferably contains at least one ionic compound.

Within a further preferred embodiment, the process stream according to the present invention preferably contains at least one compound selected from the group consisting of silicon compounds, acrylate compounds, acrylamide, agarose and vinyl acetate.

Within a further preferred embodiment, the process stream according to the present invention preferably contains at least one compound selected from the group of lignin, lignin degradation products, humic acids and/or other phenolic compounds, methyl cellulose, furan compounds and metals such as e.g. copper, iron, manganese, aluminium, nickel, silver, cadmium, chromium, zinc, magnesium, calcium.

Within the present invention, the term "raffination" is to be understood as pertaining to any treatment which removes or separates at least one compound from the initial process stream, such as but not limited to treatments comprising the removal of at least one acid and/or alkaline and/or organic compound and/or at least one mineral compound from the initial stream.

According to the present invention, deionization of the process stream according to step b) is carried out by electrodialysis using at least one bipolar membrane. Within the present invention "electrodialysis using at least one bipolar membrane" is to be understood as any technique comprising the use of three different types of membranes suitable to remove salts by removing ions such as e.g. Na⁺, K⁺, Mg²⁺, Ca²⁺, SO₄²⁻, PO₃³⁻, Cl⁻, Br⁻ and split H₂O present in the liquid phase. Electrodialysis using at least one bipolar membrane preferably comprises the use of a cation exchange membrane, an anion exchange membrane and an intermediate layer, a so-called "bipolar membrane", to enable the splitting of the water within the liquid phase into protons and hydroxide ions. Through the combination of the selective removal of ions by the cation and anion exchange membranes with the simultaneous water dissociation on the catalytic intermediate layer, the respective inorganic or organic acid and base fractions are formed.

When using electrodialysis using at least one bipolar membrane for the deionization, the ions removed from the solution are preferably recovered in a liquid called "concentrate". In this respect it is particularly preferred to add a liquid into a compartment of the electrodialysis unit before the start of the deionizaiton. In a further preferred embodiment, this liquid is not replaced after stopping the deionization of a given volume, but the concentrate is reused in repeated deionizations over at least 2 cycles, more preferred at least 4 cycles, particularly preferred 6 cycles and most preferred 10 cycles.

Within a preferred embodiment, at least one cation exchange membrane, at least one anion exchange membrane and at least one catalytic intermediate layer or bipolar membrane are used. Within a further preferred embodiment, at least two sets of these membranes are arranged in series, preferably at least 4 sets, further preferred at least 6 sets and most preferred at least 10 sets. Within a particularly preferred embodiment, all three membranes or all sets of membranes as defined before are arranged within a single device.The electrodialysis membranes used preferably have a cut-off of at most 400 Da, more preferred at most 200 Da, most preferred of at most 100 Da to provide a deionization with higher selectivity.

The deionization is preferably carried out at a temperature within the range of from 4 °C to 80 °C, more preferred within the range of from 10 °C to 75 °C, most preferred within the range of from 15 °C to 70 °C. The pressure drop through the electrodialysis cell is preferably below 1 bar, more preferred below 0.5 bar. Within a further particularly preferred embodiment, deionization is carried out until the conductivity of the solution is reduced to at least 40 mS/cm, more preferred to at least 35 mS/cm particularly preferred to at least 30 mS/cm and most preferred to at least 25 mS/cm.

Particularly preferred is a process for the raffination of process streams wherein step b) is performed at a voltage of preferably from 10 V to 500 V, more preferred from 15 V to 400 V, also preferred from 20 to 300V.

In a further preferred embodiment, the deionization by electrodialysis using at least one bipolar membrane is followed by capacitive deionization. The capacitive deionization is preferably applied as so-called "membrane capacitive deionization", i.e. by inserting a cation exchange membrane and an anion exchange membrane into the capacitive deionization unit. If the electrodialysis using at least one bipolar membrane is followed by membrane capacitive deionization, the electrodialysis is preferably performed until the conductivity of the solution is reduced to at least 40 mS/cm, more preferred to at least 35 mS/cm particularly preferred to at least 30mS/cm and most preferred to at least 25 mS/cm before switching to membrane capacitive deionization. The membrane capacitive deionization following the electrodialysis is then used to further decrease the conductivity of the solution preferably to at least 35 mS/cm, more preferred to at least 30 mS/cm, particularly preferred to at least 25 mS/cm and most preferred to at least 20 mS/cm.

In another preferred embodiment, the deionization by electrodialysis using at least one bipolar membrane is followed by ion exchange chromatography. If the electrodialysis using at least one bipolar membrane is followed by ion exchange chromatography, the electrodialysis is preferably performed until the conductivity of the solution is reduced to at least 40 mS/cm, more preferred to at least 35 mS/cm particularly preferred to at least 30 mS/cm and most preferred to at least 25 mS/cm before switching to membrane capacitive deionization. The ion exchange chromatography following the electrodialysis is then used to further decrease the conductivity of the solution preferably to at least 35 mS/cm, more preferred to at least 30 mS/cm, particularly preferred to at least 25 mS/cm and most preferred to at least 20 mS/cm.

Within the present invention, "ion exchange" is defined as an exchange of ions between a solution containing at least one ion and a solid polymeric or mineralic ion exchange material, wherein an ion dissolved in the solution is exchanged and replaced through contact with the ion exchange material by an ion of the same charge.

According to step c) of the inventive process the acid and alkaline fraction are separated from the process stream. The deionization according to step b) therefore generates an acid fraction, an alkaline fraction and a de-salted liquid phase / process stream. Separation according to the present invention can be carried out by any method or means known to a person skilled in the art as suitable for the inventive process and is preferably carried out in a continuous manner during the deionization step.

Depending on the salt content of the process stream, the acid fraction may contain one or more acids such as e.g. HCl, HBr, formic acid, acetic acid, lactic acid, sulfuric acid, phosphoric acid, nitric acid, citric acid and succinic acid. The alkaline fraction may contain one or more alkalines such as e.g. NaOH, KOH, Mg(OH)₂ and Ca(OH)₂. Within a preferred embodiment, the alkaline fraction has a pH of from 9 to 14, more preferred from 12 to 13. Within another preferred embodiment, the acid fraction has a pH of from 1 to 5, more preferred from 2 to 4.

According to step d) of the inventive process, at least part of the separated acid and/or alkaline fraction is added to step b) of the process. It is thereby preferred to add from 0.5 to 99 wt.-% of the separated acid or alkaline fraction to step b) of the process, preferably from 1 to 98 wt.-%, further preferred from 1.5 to 97 wt.-% and most preferred from 2 to 96 wt.-%. Within a particularly preferred embodiment of the present invention, all of the separated alkaline or acid fraction is added to step b) of the process.

By adding at least part of the acid and/or alkaline fraction to step b) of the inventive process, the pH adjustment necessary to prevent polymerization, gelling and/or particle formation of the process stream during deionization can be carried out without the need to use and buy additional acid(s) and/or alkaline(s). This leads not only to a reduction of purchase and logistic costs but also to a reduction of disposal costs. Sulfuric acid, HCl or NaOH, which are usually used within such processes due to its availability in high quantities at low purchasing costs, requires an extensive and costly waste management.

Within a further preferred embodiment of the process of the present invention, at least part of the separated alkaline fraction is added to step b) of the process. Within a particularly preferred embodiment the separated alkaline fraction is added to step b) to keep the pH of the process stream at a constant value within a range of 0.5 % of its initial pH, preferably 0.2 %, most preferred 0.1 %.

Within a further preferred embodiment of the process of the present invention, at least part of the separated acid fraction is added to step b) of the process. Within a particularly preferred embodiment the separated acid fraction is added to step b) to keep the pH of the process stream at a constant value within a range of 0.5 % of its initial pH, preferably 0.2 %, most preferred 0.1 %.

Another application of the separated alkaline and/or acid fraction is the utilization for cleaning in place (CIP) of one or more of the devices used within the process. A particularly preferred application of the separated alkaline and/or acid fraction is the utilization for cleaning the bipolar membrane. Utilization of the separated alkaline and/or acid fraction not used within step d) of the inventive process for CIP application(s) and/or cleaning of the bipolar membrane leads to further cost reductions.

Within a preferred embodiment of the inventive process, the preferred temperature of the process stream, particularly preferred the temperature during the entire process, is adjusted to a temperature selected from the range of from 4 to 80 °C, preferably of from 5 to 70 °C, further preferred of from 10 to 70 °C wherein ranges of from 4 to 50 °C and 5 to 40 °C as well as from 40 to 60 °C and from 45 to 65 °C are also preferred. The adjustment is to be carried out by any measure known to a person skilled in the art as suitable for the inventive process.

"Addition" according to the present invention can be carried out by any method or means known to a person skilled in the art as suitable for the inventive process and is preferably carried out in a continuous manner such as feeding during the deionization step b) but may also be carried out batch-wise.

Steps a) to d) as defined above are to be repeated at least once. It is thereby preferred to repeat steps a) to d) from 2 to 100000 times, preferably from 10 to 70000 times, more preferred from 15 to 50000 times and most preferred from 17 to 10000 times. Within a particularly preferred embodiment of the process of the present invention, the process is carried out as a continuous process. It is within the scope of the present invention that a cleaning step of a vessel and/or any other part of the system such as the bipolar membrane is carried out at any time in between or after steps a) to d). The cleaning may be carried out by any measure known to a person skilled in the art as suitable for the inventive purpose and may also include exchange of one or more parts of the system. Within a further preferred embodiment, steps a) to d) are at least partially carried out simultaneously.

Within a preferred embodiment, step a) is preceeded by a filtration step. It is preferred to select a filtration membrane with a pore size of from 1.0 nm to 20 µm, further preferred of from 2.0 nm to 9 µm, particularly preferred of from 5.0 nm to 8 µm and most preferred of from 6 nm to 6 µm. It is also preferred that the filtration is carried out as micro-filtration wherein the pore size is selected of from 0.01 µm to 20 µm, preferably of from 0.05 µm to 4 µm. The membranes used are preferably polymeric membranes composed of polyethersulfone, polypropylene, polyvinylidenfluoride, glass fiber, cellulose, cellulose acetate, nitrocellulose. Further preferred are ceramic membranes composed of Al₂O₃, SiO₂, Zr₂O, TiO₂, silicon carbide. The membranes used may also comprise further components.

It is to be understood that a person skilled in the art, once informed about preferred parameters and process operation as disclosed herein, is able to select and/or combine all embodiments and preferred ranges disclosed and described within the present application to adapt the inventive process to the respective process stream. In the following particularly preferred embodiments of the inventive process are described which are not to be understood as limiting the invention in any respect.

### Particularly preferred embodiment 1

Particularly preferred is a process for the raffination of process streams comprising the steps
a) Providing a process stream which is characterized by an increase of viscosity to at least 10 mPa·s at a shear rate of 20 s⁻¹ and 20 °C occurring within a time period of less than 2 hours times membrane surface area in m² per liter volume treated, due to a pH decrease in the process stream of at least 0.5 %; or which is characterized by particle formation of a Sauter mean diameter d32 of at least 0.2 µm or a turbidity of at least 20 FNU within a time period of less than 2 hours times membrane surface area in m² per liter volume treated, due to a pH decrease in the process stream of at least 0.5 %;
b) Deionization of the process stream by electrodialysis using at least one bipolar membrane;
c) Separation of an alkaline fraction from the deionized process stream;
d) Addition of at least part of the separated alkaline fraction to the stream of step b) to keep the pH of the process stream at a constant value within a range of 0.5 % of its initial pH, preferably 0.2 %, most preferred 0.1 %;
wherein steps a) to d) are repeated at least once.

### Particularly preferred embodiment 2

Particularly preferred is a process for the raffination of process streams comprising the steps
a) Providing a process stream which is characterized by an increase of viscosity to at least 10 mPa·s at a shear rate of 20 s⁻¹ and 20 °C occurring within a time period of less than 2 hours times membrane surface area in m² per liter volume treated, due to a pH increase in the process stream of at least 0.5 %; or which is characterized by particle formation of a Sauter mean diameter d32 of at least 0.2 µm or a turbidity of at least 20 FNU within a time period of less than 2 hours times membrane surface area in m² per liter volume treated, due to a pH increase in the process stream of at least 0.5 %;
b) Deionization of the process stream by electrodialysis using at least one bipolar membrane;
c) Separation of an acid fraction from the deionized process stream;
d) Addition of at least part of the separated acid fraction to the stream of step b) to keep the pH of the process stream at a constant value within a range of 0.5 % of its initial pH, preferably 0.2 %, most preferred 0.1 %;
wherein steps a) to d) are repeated at least once.

### Particularly preferred embodiment 3

Particularly preferred is a process for the raffination of process streams comprising the steps
a) Providing a process stream which is characterized by an increase of viscosity to at least 10 mPa·s at a shear rate of 20 s⁻¹ and 20 °C occurring within a time period of less than 2 hours times membrane surface area in m² per liter volume treated, due to a pH variation in the process stream of at least 0.5 %;
b) Deionization of the process stream by electrodialysis using at least one bipolar membrane;
c) Separation of an alkaline and/or acid fraction from the deionized process stream;
d) Addition of at least part of the separated alkaline and/or acid fraction to the stream of step b) to keep the pH of the process stream at a constant value within a range of 0.5 % of its initial pH, preferably 0.2 %, most preferred 0.1 %;
wherein steps a) to d) are repeated at least once and wherein the process stream comprises at least one compound selected from the group consisting of silicon compounds, acrylate compounds, acrylamide, agarose and vinyl acetate.

### Particularly preferred embodiment 4

Particularly preferred is a process for the raffination of process streams comprising the steps
a) Providing a process stream which is characterized by particle formation of a Sauter mean diameter d32 of at least 0.2 µm or a turbidity of at least 20 FNU within a time period of less than 2 hours times membrane surface area in m² per liter volume treated, due to a pH variation in the process stream of at least 0.5 %;
b) Deionization of the process stream by electrodialysis using at least one bipolar membrane;
c) Separation of an alkaline and/or acid fraction from the deionized process stream;
d) Addition of at least part of the separated alkaline and/or acid fraction to the stream of step b to keep the pH of the process stream at a constant value within a range of 0.5 % of its initial pH, preferably 0.2 %, most preferred 0.1 %;
wherein steps a) to d) are repeated at least once and wherein the process stream comprises at least one compound selected from the group consisting of lignin, lignin degradation products, humic acids and/or other phenolic compounds, methyl cellulose, furan compounds and metals such as e.g. copper, iron, manganese, aluminium, nickel, silver, cadmium, chromium, zinc, magnesium, calcium.

### Particularly preferred embodiment 5

Particularly preferred is a process for the raffination of process streams comprising the steps as defined in any of preferred embodiments 1 to 4, wherein step a) is preceeded by a filtration step, particularly preferred by a filtration with a membrane of a pore size of from 1.0 nm to 20 µm.

### Particularly preferred embodiment 6

Particularly preferred is a process for the raffination of process streams comprising the steps as defined in any of preferred embodiments 1 to 5, wherein steps a) to d) are performed at a temperature of preferably 4 °C to 50 °C.

### Particularly preferred embodiment 7

Particularly preferred is a process for the raffination of process streams comprising the steps as defined in any of preferred embodiments 1 to 6, wherein step b) is performed at a voltage of preferably from 10 V to 500 V, more preferred from 15 V to 400 V, also preferred from 20 to 300 V.

### Particularly preferred embodiment 8

Particularly preferred is a process for the raffination of process streams comprising the steps as defined in any of preferred embodiments 1 to 7, wherein the electrodialysis membrane stack contains membranes wih a cut-off of the cation or anion exchange membranes is preferably at most 400 Da, more preferred at most 200 Da, most preferred at most 100 Da.

### Particularly preferred embodiment 9

Particularly preferred is a process for the raffination of process streams comprising the steps as defined in any of preferred embodiments 1 to 8, wherein step d) is followed by cleaning step for cleaning the bipolar membrane using at least part of the acid and/or alkaline fraction produced during step b) as cleaning agent.

### Examples

The present invention is now described by the following examples. The examples are for illustrative purposes only and are not to be understood as limiting the invention.

### Example 1

Cereal straw with a dry matter content of 45 wt.-% was pretreated by steam explosion (220 °C). After the steam explosion, the so pretreated cereal straw ("substrate") was introduced into a stirred tank (Labfors, Infors AG, Switzerland). An enzyme composition containing 91.3 wt.-% Celluclast^{®} (Cellulase from *Trichoderma reesei* ATCC 26921, C2730 Sigma) and 8.7 wt.-% Glucosidase (49291 Sigma) was added to the substrate at an enzyme to solid ratio of 0.5 wt.-% to hydrolyze the substrate to obtain a slurry. The hydrolysis was carried out at 50 °C, pH 5.0 for 72 hours with stirring at 50 rpm. After hydrolysis, the liquid phase ("process stream") was deionized using electrodialysis with bipolar membranes (ED64004, PCCell) with a membrane stack composed of 10 bipolar membranes (PCCell), 10 anion exchange membranes (PC 200D, PCCell) and 9 cation exchange membranes (PC SK, PCCell). The electrodialysis was performed at 32 °C for a duration of 2 h with pump rates of 50 L/h for the diluate and the acid and base (alkaline) fraction. To keep the pH value at a constant value of 5.0, the produced base fraction is simultaneously fed into the process stream with a flow rate of 100 mL/h. After 2 h, the conductivity decreased by 83 % leading to a de-salted hydrolysate. This self-sufficient process recycling the produced base permitted thus to de-salt the hydrolysate without addition of external base and without precipitation of organic components within the electrodialysis unit during the desalination. A reference run without self-sufficient recycling of base led to precipitation in the process stream to be desalted, clogging the electrodialysis membrane irreversibly and thus leading to significant damage to the electrodialysis unit. Even after repeated an prolonged cleaning, the membrane stack used in the reference showed a higher transmembrane pressure as compared to a new membrane stack by 0.2 bar.

### Example 2

A process stream with high salt concentrations (75 g/L) containing among others sodium, bromide and silicon compounds was deionized using electrodialysis with bipolar membranes (ED64004, PCCell). The starting pH of the process stream to be desalted was pH 11. The membrane stack used was composed of 10 cell pairs, each with a bipolar membrane (PCCell), an anion exchange membrane (PC AV, PCCell) and a cation exchange membrane (PC SK, PCCell). The electrodialysis was performed at 25 °C for a duration of 1.5 h. The base (alkaline) fraction, produced during the deionization, was used to keep the pH of the process stream at a constant value of pH 11 with a flow rate of 200 mUh. After 1.5 h the conductivity of the process stream decreased by 76 % leading to a process stream with a reduced salt content. This self-sufficient process recycling the produced base permitted thus to de-salt the process stream without addition of external base and without polyermization of silicon compounds within the electrodialysis unit during the desalination. A reference run without self-sufficient recycling of base led to polymerization in the process stream to be desalted before the desalting was completed, forming a jelly-like solid, blocking the pumps and clogging the complete electrodialysis unit and membrane stack irreversibly and thus leading to significant damage to the electrodialysis unit. The electrodialysis unit had to be disassembled and the tubes and pipes had to be replaced. The membrane stack could not be used in futher experiments and had to be thrown away.

### Example 3

The cleaning of the membrane stack was done by a cleaning-in-place procedure. First, the membrane stack was washed with water at 25 °C at a flow rate of 30 L/h for 10 min. In a second step, the membrane stack was washed with the acid fraction produced during the electrodialysis with bipolar membranes to remove mineral compounds from the membrane surface. The washing with the acidic solution is done at 25 °C at a flow rate of 30 L/h for 10 min. Then, the base fraction produced during electrodialysis with bipolar membranes is used for a third washing step at 25 °C at a flow rate of 30 L/h for 10 min. to remove organic compounds from the membrane surface. Finally, the membrane stack is washed with water three times at 25 °C, 30 L/h for 10 min. Using this washing procedure, it was assured that the membrane stack led to the same desalting efficiency than before the first run.

## Claims

1. Process for the raffination of process streams comprising the steps
a) Providing a process stream which is **characterized by** an increase of viscosity to at least 10 mPa·s at a shear rate of 20 s⁻¹ and 20 °C occurring within a time period of less than 2 hours times membrane surface area in m² per liter volume treated, due to a pH variation in the process stream of at least 0.5 %; and/or which is **characterized by** particle formation of a Sauter mean diameter d32 of at least 0.2 µm or a turbidity of at least 20 FNU, within a time period of less than 2 hours times membrane surface area in m² per liter volume treated, due to a pH variation in the process stream of at least 0.5 %;
b) Deionization of the process stream by electrodialysis using at least one bipolar membrane;
c) Separation of an acid and/or an alkaline fraction from the deionized process stream;
d) Addition of at least part of the separated alkaline and/or acid fraction to the stream of step b);
wherein steps a) to d) are repeated at least once.

2. Process according to claim 1, wherein at least part of the separated alkaline fraction is added to the stream of step b).

3. Process according to claim 1, wherein at least part of the separated acid fraction is added to the stream of step b).

4. Process according to any of the preceeding claims, wherein the process stream contains at least one ionic compound.

5. Process according to any of the preceeding claims, wherein the process stream contains at least one compound selected from the group consisting of silicon compounds, acrylate compounds, acrylamide, agarose and vinyl acetate.

6. Process according to any of the preceeding claims, wherein the process stream contains at least one compound selected from the group consisting of lignin, lignin degradation products, humic acids and/or other phenolic compounds, methyl cellulose, furan compounds and metals such as copper, iron, manganese, aluminium, nickel, silver, cadmium, chromium, zinc, magnesium, calcium.

7. Process according to any of the preceeding claims, wherein the deionization of step b) is followed by an ion chromatography or capacitive deionization.

8. Process according to any of the preceeding claims, wherein step a) is preceeded by a filtration step.

9. Process according to claim 8 wherein step a) is preceeded by a filtration step using a membrane with a pore size of from 1.0 nm to 20.0 µm.

10. Process according to any of the preceeding claims wherein the temperature is selected from the range of from 4 °C to 80 °C.
